# EUROPÄISCHE PATENTSCHRIFT

(11) **EP 1 789 814 B1**
(45) Veröffentlichungstag und Bekanntmachung des Hinweises auf die Patenterteilung: **15.08.2012**
(21) Anmeldenummer: 05754541.0
(22) Anmeldetag: 01.06.2005
(51) Int. Cl.: G01S 13/58, G01S 13/93, G01S 7/40

(54) **VERFAHREN UND VORRICHTUNG ZUR OBJEKTDETEKTION BEI EINEM FAHRZEUG**
METHOD AND DEVICE FOR DETECTING OBJECTS, USED IN A VEHICLE
PROCEDE ET DISPOSITIF DE DETECTION D'OBJET, UTILISES DANS UN VEHICULE

(30) Priorität: 28.07.2004 DE 102004036580
(43) Veröffentlichungstag der Anmeldung: 30.05.2007
(73) Patentinhaber: ROBERT BOSCH GMBH, 70442 Stuttgart (DE)
(72) Erfinder: HAAG, Peter, 74842 Billigheim (DE); JORDAN, Rüdiger, 70435 Stuttgart (DE)
(86) Internationale Anmeldenummer: PCT/EP2005/052503
(87) Internationale Veröffentlichungsnummer: WO 2006/010662

(56) Entgegenhaltungen:
- WO-A-99/27384
- WO-A-99/36796
- US-A- 3 831 174
- US-A- 4 005 421
- US-A- 4 472 718
- US-A- 4 595 925
- US-B1- 6 243 037

## Beschreibung

Die vorliegende Erfindung betrifft ein Verfahren und eine Vorrichtung zur Objektdetektion bei einem Fahrzeug, das mit einem Objektdetektionssystem ausgestattet ist, wobei das Objektdetektionssystem elektromagnetische Wellen aussendet und an Objekten innerhalb des Detektionsbereichs reflektierte Wellen empfängt, und die an einem erkannten Objekt reflektierten Wellen, die zusätzlich an einem entlang der Fahrbahn ausgedehnten Gegenstand reflektiert wurden, ausgewertet werden. Die Auswertung besteht dabei aus einer Plausibilisierung, bei der mit den indirekten Objektreflexionen, die direkt gemessenen Objektreflexionen verifiziert werden oder darin, dass die Auswertung darin besteht, dass wenn von einem zuvor detektierten Objekt keine Reflexion mehr messbar ist, die indirekte Objektreflexion zur weiteren Objektdetektion herangezogen wird.

### Stand der Technik

Aus der Veröffentlichung "Adaptive Fahrgeschwindigkeitsregelung ACC", herausgegeben von der Robert Bosch GmbH, Stuttgart im April 2002 (ISBN-3-7782-2034-9) ist ein adaptiver Abstands- und Geschwindigkeitsregler bekannt, der mittels ausgesandter Mikrowellenstrahlung vorherfahrende Fahrzeuge erkennt und in die Antriebs- und Verzögerungseinrichtungen des Fahrzeugs derart eingreift, dass bei einem erkannten, vorausfahrenden Fahrzeug eine Geschwindigkeitsregelung im Sinne einer Abstandskonstanhegelung durchgeführt wird und bei Nichtvorhandensein eines vorherfahrenden Fahrzeugs eine Geschwindigkeitsregelung im Sinne einer Geschwindigkeitskonstantregelung durchgeführt wird. Hierzu wird Mikrowellenstrahlung, die FMCW-moduliert wird, ausgestrahlt und Teilwellen der ausgesandten Strahlung, die an den Objekten im Sensorerfassungsbereich reflektiert wurde, vom Abstandssensor wieder empfangen und ausgewertet.

Aus der US 3,831,174 ist ein luftfahrzeuggestütztes Bewegtziel-Erkennungs-Radar bekannt, mittels dem Luftziele über großen Wassermassen gesucht und verfolgt werden. Hierzu werden versetzte Pulswiederholfrequenzen verwendet, um Mehrdeutigkeiten in der gemessenen Entfernung aufzulösen, indem Mehrwegeausbreitungen genutzt werden. Die Anzahl der der empfangenen Reflexionen bei einer Pulswiederholfrequenz wird mit der bei anderen Pulswiederholfrequenzen verglichen, was zu einer Aussage der Qualität der Objektreflexion bei neu erkannten Objekten ausgewertet werden kann, wobei jede gemessene Detektion mit bereits getrackten Objekten korreliert wird.

Aus der WO 99/36796 ist eine oberhalb einer reflektierenden Fläche angeordnete Radaranordnung bekannt, bei der zur Schätzung der Höhe eines Objekts über der Fläche ein Verfahren vorgesehen ist, welches ohne eine verfeinerte Winkelauflösung der Radarantenne auskommt und allein auf der Verarbeitung der Signale basiert. Die Erfindung macht sich das üblicherweise als nachteilig empfundene Entstehen eines Interferenzmusters des Strahlungsfeldes der Radarantenne zunutze, indem die Intensitätsmodulation eines Empfangssignals, welches von einem in dem Überwachungsbereich radial zur Radaranordnung bewegten Objekts herrührt, ausgewertet und in Verbindung mit der gemessenen Objektentfernung zur Schätzung eines Wertes für die Höhe des Objektes über der Fahrbahn herangezogen wird.

Aus der WO 99/27384 ist ein ein Verfahren zum Klassifizieren von Objekten, die von einer an einem Fahrzeug angebrachten Radareinrichtung erfasst werden, bekannt, die auf der Einsicht basiert, dass die Amplitude des Radar-Reflexes oder des Echos von dem Objekt, wenn sich das Fahrzeug einem Objekt von vorne nähert, unterschiedliche Eigenschaften zeigen wird. Die Erfassung dieses unterschiedlichen Verhaltens kann somit verwendet werden, um entsprechend das Objekt als eine Gefahr oder keine Gefahr zu klassifizieren.

Aus der US 4,595,925 ist ein Höhenerkennungs-Radar bekannt, bei dem eine direkte und eine Mehrwegeausbreitung verwendet wird und anhand der Pulsweite die durch die indirekte Ausbreitung beeinflusst wird, die Höhe des detektierten Radarziels gegenüber dem Sender und Empfänger bestimmen zu können.

Aus der US 6,243,037 ist ein über den Horizont hinwegblickendes Ionosphärenradar bekannt, bei dem nur indirekte, an Atmosphärenschichten reflektierte Signale bei der Objektdetektion Verwendung finden.

### Kern und Vorteile der Erfindung

Der Kern der vorliegenden Erfindung ist es, ein Verfahren und eine Vorrichtung anzugeben, mittels der die Objektdetektion bei einem Fahrzeug mit einem Objektdetektionssystem und einem adaptiven Abstands- und Geschwindigkeitsregler verbessert wird, indem Objektreflexionen, die zusätzlich an einem entlang der Fahrbahn ausgedehnten Gegenstand wie beispielsweise einer Leitplanke reflektiert werden, zur Objektverifikation benutzt werden oder bei Nichtvorhandensein einer direkten Objektreflexion, also einer Mikrowellenreflexion am vorherfahrenden Fahrzeug ohne Leitplankenspiegelung, die indirekte Reflexion, also die Mikrowellenreflexion am vorherfahrenden Fahrzeug mit zusätzlicher Reflexion an der Leitplanke ersetzt wird und die indirekte Objektreflexion zum weiteren Objekttracking, herangezogen wird.

Erfingdungsgemäß wird dieses durch die Merkmale der unabhängigen Ansprüche gelöst. Vorteilhafte Weiterbildungen und Ausgestaltungen ergeben sich aus den Unteransprüchen. Da Leitplanken gute Radarreflektoren sind, kann es bei Verwendung eines Radarsensors zur Fahrzeugsteuerung zu Spiegelungen an Leitplanken kommen, bei denen Reflexionen der Radarstrahlung des Objektsensors an realen Objekten zusätzlich an der Leitplanke gespiegelt werden und hierdurch ein Scheinobjekt entsteht, das sich beispielsweise außerhalb der Straße bewegt. Dieses Scheinobjekt kann von dem realen Objekt nur schwer unterschieden werden, da bei Objekten, die etwa den gleichen Abstand und die gleiche Relativgeschwindigkeit aufweisen, in diesem Fall eine Objekttrennung mittels des empfangenen Azimutwinkels nicht möglich ist, selbst wenn der Radarsensor normalerweise den Azimutwinkel auflösen kann. Die Ursache dessen ist, dass sich die Reflexionsanteile der Spiegelung und des realen Objektes überlagern, wobei der stärkere Anteil dominiert und die Spiegelung eine wesentliche höhere Signalstärke als die direkte Reflexion am realen Objekt haben kann, da der Radarrückstreuquerschnitt sehr stark vom Ansichtswinkel des Objekts abhängt und somit nur der Azimutwinkel des Objektes gemessen wird, das die höhere Signalstärke aufweist. Es ist daher der Kern der vorliegenden Erfindung, Abrisse beim Objekttracking sowie Scheinziele aufgrund von Leitplankenspiegelungen zu vermeiden.

Vorteilhafterweise ist, dass die Auswertung eine Plausibilisierung ist, bei der mit den indirekten Objektreflexionen, die zusätzlich an einem entlang der Fahrbahn ausgedehnten Gegenstand reflektiert wurden, die direkt gemessenen Objektreflexionen, die nicht an einem entlang der Fahrbahn ausgedehnten Gegenstand reflektiert wurden, verifiziert werden.

Weiterhin ist es vorteilhaft, dass die Auswertung darin besteht, dass wenn von einem zuvor direkt detektierten Objekt keine Reflexion mehr messbar ist, die indirekte Objektreflexion, die an einem entlang der Fahrbahn ausgedehnten Gegenstand reflektiert wurde, zur weiteren Objektdetektion herangezogen wird.

Weiterhin ist es vorteilhaft, dass die entlang der Fahrbahn ausgedehnten Gegenstände, Leitplanken, Tunnelwände, Lärmschutzwände Begrenzungsmauern oder in regelmäßigen Abständen angeordnete Leitpfosten sind.

Weiterhin ist es vorteilhaft, dass zur Auswertung die indirekte Objektreflexion in eine angenommene, direkte Objektreflexion umgerechnet wird.

Besonders vorteilhaft ist es, dass zur Umrechnung der indirekten Objektreflexion in eine angenommene, direkte Objektreflexion die Position des entlang der Fahrbahn ausgedehnten Gegenstandes geschätzt wird.

Weiterhin ist es vorteilhaft, dass die Umrechnung derart geschieht, dass der gemessene Objektaufenthaltsort, der durch die indirekte Messung detektiert wurde, an dem entlang der Fahrbahn ausgedehnten Gegenstand gespiegelt wird.

Von besonderer Bedeutung ist die Realisierung des erfindungsgemäßen Verfahrens in der Form eines Steuerelements, das für ein Steuergerät einer adaptiven Abstands- bzw. Geschwindigkeitsregelung eines Kraftfahrzeugs vorgesehen ist. Dabei ist auf dem Steuerelement ein Programm gespeichert, das auf einem Rechengerät, insbesondere auf einem Mikroprozessor oder Signalprozessor, ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

### Zeichnungen

Nachfolgend werden Ausfuhrungsbeispiele der Erfindung anhand von Zeichnungen erläutert. Es zeigen
Figur 1 ein schematisches Blockschaltbild einer Ausführungsform der erfindungsgemäßen Vorrichtung,
Figur 2 eine Darstellung zur Erläuterung des erfindungsgemäßen Verfahrens und
Figur 3 ein Ablaufdiagramm einer Ausführungsform des erfindungsgemäßen Verfahrens.

### Beschreibung von Ausfuhnmgsbeispielen

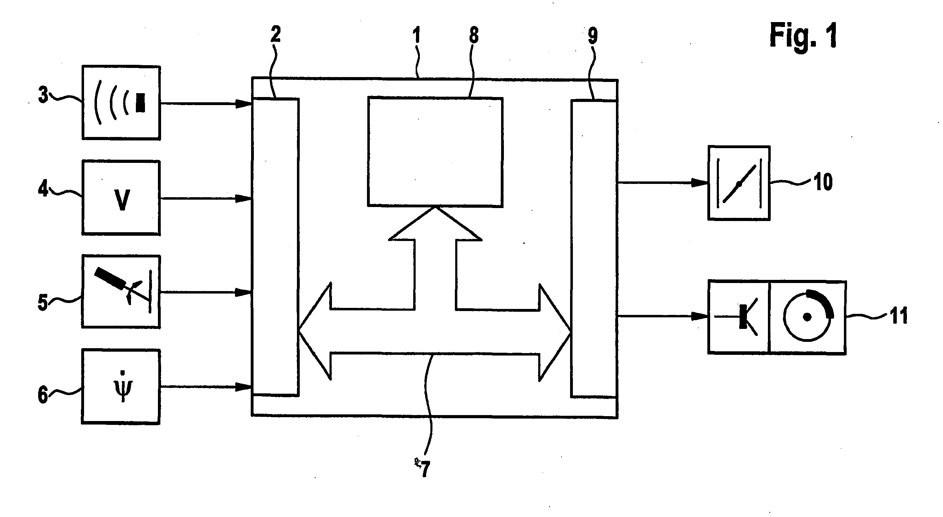

In Figur 1 ist ein schematisches Blockschaltbild einer Ausführungsform der erfindungsgemäßen Vorrichtung dargestellt. Zu erkennen ist ein adaptiver Abstands- und Geschwindigkeitsregler 1, der unter anderem eine Eingangsschaltung 2 aufweist. Mittels dieser Eingangsschaltung 2 sind dem Abstands- und Geschwindigkeitsregler 1 Eingangssignale zuführbar. Als Eingangssignale werden dem Abstands- und Geschwindigkeitsregler 1 unter anderem Signale einer Objektsensorik 3 zugeführt. Diese Objektsensorik 3 kann beispielsweise als Radarsensor, als Lasersensor, als Videosensor oder als eine Kombination aus diesen Sensorarten ausgeführt sein und hier bei einen oder mehrere Einzelsensoren umfassen. Besonders vorteilhaft ist die Objektsensorik 3 derart ausgeführt, dass elektromagnetische Strahlung ausgesandt wird, an den Objekten im Sensorerfassungsbereich reflektiert wird und die reflektierten Teilwellen von der Objektsensorik 3 wieder empfangen und wieder ausgewertet werden. Die Auswertung ermittelt aus den Messwerten insbesondere den Abstand sowie die Relativgeschwindigkeit der erkannten Objekte sowie den Azimutwinkel der erkannten Objekte, unter dem die Objekte bezüglich der verlängerten Fahrzeuglängsachse des eigenen Fahrzeugs positioniert sind. Weiterhin wird der Eingangsschaltung 2 des Abstands- und Geschwindigkeitsreglers 1 ein Geschwindigkeitssignal V eines Geschwindigkeitssensors 4 zugeführt, das die Geschwindigkeit des eigenen Fahrzeugs repräsentiert. Hierdurch ist es möglich, die relativen Messwerte, die die Objektsensorik 3 zur Verfügung stellt, in Absolutwerte umzurechnen und damit beispielsweise stehende Ziele von bewegten Zielen zu unterscheiden. Weiterhin werden der Eingangsschaltung 2 Signale einer fahrerbetätigbaren Bedieneinrichtung 5 zugeführt, mittels der der Abstandsund Geschwindigkeitsregler 1 einschaltbar, ausschaltbar sowie in seinen Regelparametern und Einstellungen fahrerspezifisch einstellbar ist. Weiterhin wird der Eingangsschaltung 2 das Signal ψ̇ eines Gierratensensors 6 zugeführt, der die Drehung des Fahrzeugs um die

Fahrzeughochachse misst und dem Abstands- und Geschwindigkeitsregler 1 zuführt.

Mittels dieses Gierratensignals ψ̇ kann erkannt werden, ob sich das eigene Fahrzeug momentan in einer Kurvendurchfahrt befindet oder auf gerader Straße fortbewegt wird. Alternativ kann der Gierradensensor 6 auch durch einen Lenkwinkelsensor ersetzt werden, so dass aus der Betätigung des Lenkrads auf die momentan durchfahrene Kurvenkrümmung geschlossen werden kann. Die der Eingangsschaltung 2 zugeführten Eingangssignale werden mittels einer Datenaustauscheinrichtung 7 innerhalb des Abstands- und Geschwindigkeitsreglers 1 an eine Berechnungseinrichtung 8 weitergegeben, in der in Abhängigkeit der zugeführten Eingangsdaten Stellsignale für nachgeordnete Stellelemente berechnet werden. In der Berechnungseinrichtung 8 werden die relativen Positionen der erkannten Objekte ausgewertet und ein geeignetes Zielobjekt ausgewählt, in dessen Abhängigkeit die Antriebseinrichtung sowie die Verzögerungseinrichtungen des Fahrzeugs angesteuert werden. Dieses Zielobjekt ist vorteilhafterweise das Fahrzeug, das in der gleichen Fahrspur wie das eigene Fahrzeug direkt vor dem eigenen vorherfährt. In Abhängigkeit der Geschwindigkeit und des Abstandes dieses Fahrzeugs werden die nachgeordneten Stellelemente angesteuert. Hierzu werden Stellsignale ermittelt, die von der Berechnungseinrichtung 8 mittels des Datenaustauschsystems 7 an eine Ausgangsschaltung 9 weitergegeben werden. Die Ausgangsschaltung 9 gibt die Stellsignale an nachgeordnete Stellelemente aus, die das Fahrzeug beschleunigen bzw. verzögern. Als Stellelement ist zum einen ein leistungsbestimmendes Stellelement 10 der Antriebseinrichtung vorgesehen, das beispielsweise eine elektrisch betätigbare Drosselklappe oder eine Kraftstoffmengenzumesseinrichtung eines Kraftstoffeinspritzsystems sein kann.

Weiterhin werden Stellsignale von der Ausgangsschaltung 9 an die Verzögerungseinrichtungen 11 des Fahrzeugs ausgegeben, wobei die Ansteuerung der Verzögerungseinrichtungen 11 eine Bremskraft oder ein Bremsdruck aufbaut Diese Bremskraft oder dieser Bremsdruck wird durch die Fahrzeugbremsen in eine Fahrzeugverzögerung entsprechend dem Verzögerungsanforderungssignal umgesetzt

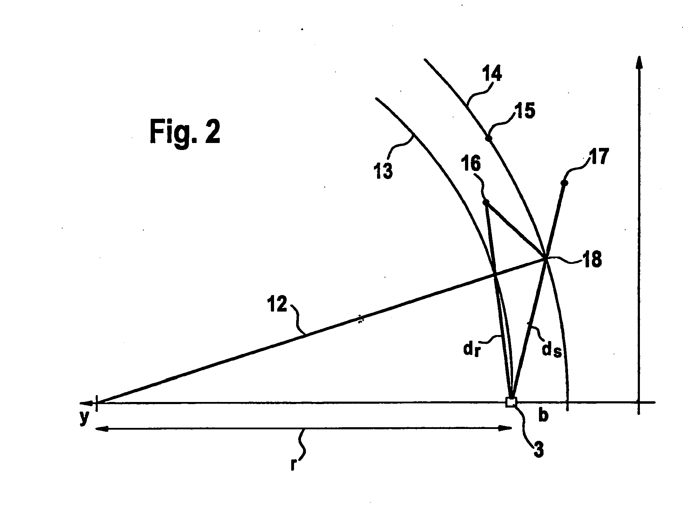

In Figur 2 ist eine Verkehrssituation dargestellt, in der das erfindungsgemäße Verfahren verwendbar ist. Zu erkennen ist die Objektsensorik 3, die vorteilhafterweise an der Vorderseite des eigenen Fahrzeugs angebracht ist, wobei sich das eigene Fahrzeug momentan während einer Kurvenfahrt befindet und sich auf dem zukünftigen Fabrzeugkurs 13 fortbewegen wird. Diese Kurvenfahrt wurde beispielsweise durch Auswertung der Gierrate ψ̇ des Gierratensensors 6 ermittelt, und aus der Gierrate ein Kurvenradius r ermittelt. Die Objektsensorik 3 hat im Objekterfassungsbereich Objekte erkannt, so z. B. ein stehendes Objekt 15 am Fahrbahnrand, ein Objekt innerhalb der Fahrspur 16 sowie ein Objekt außerhalb der Fahrspur 17. Das stehende Objekt 15 kann durch den Vergleich der eigenen Geschwindigkeit v sowie der Auswertung der Relativgeschwindigkeit des Objekts 15 vᵣₑₗ ermittelt werden und kann beispielsweise ein Schild am Straßenrand, eine Leitplanke, ein Leitpfosten am Straßenrand oder ein anderer, feststehender Gegenstand am Fahrbahnrand sein. Das bewegte Objekt 16, das ebenfalls durch die Objektsensorik 3 detektiert wurde, ist beispielsweise ein vorausfahrendes Fahrzeug, das sich mit einem Abstands dᵣ sowie einer Relativgeschwindigkeit vᵣₑₗ in die gleiche Richtung fortbewegt, wie das eigene Fahrzeug. Dieses Objekt 16 wurde mittels einer direkten Objektreflexion gemessen, dies bedeutet, dass die von der Objektsensorik 3 ausgesandte Mikrowellenstrahlung am Objekt 16 reflektiert wurde und unmittelbar von der Objektsensorik 3 wieder empfangen wurde. Weiterhin ist in der dargestellten Situation ein entlang der Fahrbahn ausgedehnter Gegenstand 14 vorhanden, der beispielsweise als Leitplanke, als Tunnelwand, als Lärmschutzmauer oder als regelmäßig angeordnete Leitpfosten am Fahrbahnrand angeordnet ist. An diesem, entlang der Fahrbahn ausgedehnten Gegenstands 14 findet eine weitere Reflexion der Messstrahlung statt, so dass ein Scheinziel 17 gemessen wird. Dieses Scheinziel 17 basiert auf einer indirekten Objektreflexion, bei der die von der Objektsensorik 3 ausgesandte Messstrahlung am vorherfahrenden Fahrzeug 16 reflektiert wurde, in Richtung des Gegenstands am Fahrbahnrand zurückgestrahlt wurde und an dem Gegenstand 14, der entlang der Fahrbahn ausgedehnt ist, nochmals im Punkt 18 reflektiert und somit als indirekte Objektreflexion von der Objektsensorik 3 empfangen wurde. Diese indirekte Objektreflexion wird von der Objektsensorik 3 als Scheinziel 17 erkannt, das eine Objektposition 17 angibt, die jenseits der Leitplanke, also außerhalb der Fahrbahn ist. Dieses Scheinziel 17 bewegt sich mit betragsmäßig der gleichen Geschwindigkeit vᵣₑₗ wie das Objekt 16, weist jedoch den Abstand dₛ auf. Um zu erkennen, ob sich ein gemessenes Objekt diesseits oder jenseits des Gegenstands 14, der entlang des Fahrbahnrandes ausgedehnt ist, befindet, wird der Fahrbahnrand 14 geschätzt oder gemessen. Hierzu werden stehende Ziele 15 ausgewertet, die am Fahrbahnrand angeordnet sind, beispielsweise Verkehrsschilder, Leitplanken oder ähnliche, reflektierende Gegenstände. Sollten derartige, stehende Objekte 15 nicht erkannt werden, so ist es weiterhin möglich, den Fahrbahnrand 14 zu schätzen, indem ein Querversatz b des Fahrbahnrandes zur Objektsensorik 3 angenommen wird und der Fahrbahnrand einen Krümmungsradius 12 aufweist, der dem Krümmungsradius r+b entspricht, wobei r der Krümmungsradius des eigenen Fabrzeugkurses 13 ist, der mittels des Gierratensensors 6 ermittelt wurde und b der laterale Querversatz der Objektsensorik zum geschätzten Fahrbahnrand ist. Anhand dieses gemessenen oder geschätzten Fahrbahnrandes, kann der Reflexionspunkt 18 berechnet werden, an dem die direkte Objektreflexion des vorherfahrenden Fahrzeugs 16 nochmals reflektiert wird und somit das Scheinziel 17 bildet. Da erkannt wird, dass das Objekt 17 jenseits der Leitplanke 14 ist, kann davon ausgegangen werden, dass es sich hierbei um ein Scheinziel handelt und bei Kenntnis des Reflexionspunkts 18 der Messstrahlung an der Leitplanke 14 sowie dem Krümmungsradius r des eigenen Fahrzeugskurses 3 und dem lateralen Querversatz b sowie unter Zuhilfënahme der Messwerte dᵣ und dₛ, der Strahl zwischen der Objektsensorik 3 und dem Scheinziel 17 an der Leitplanke 14 im Reflexionspunkt 18 gespiegelt werden, so dass sich eine scheinbar reale Objektposition errechnen läßt. Aus dem Vergleich der berechneten, scheinbar realen Objektposition und des real gemessenen Objektaufenthaltsortes des Objektes 16 kann die Messung zur Plausibilisierung der Messwerte herangezogen werden, da der berechnete, scheinbar reale Aufenthaltsort des Scheinziels 17 in etwa dem Aufenthaltsort des bewegten Objektes 16 entspricht sowie beide Objekte die gleiche Relativgeschwindigkeit Vᵣₑₗ bezüglich der Objektsensorik 3 aufweisen. Da beim Auftreten von Scheinzielen der indirekte Objektreflexionsstrahl dₛ von der Intensität her stärker sein kann, als der direkte Objektreflexionsstrahl dᵣ ist es möglich, dass mittels der Objektsensorik 3 das bewegte Objekt 16 nicht mehr erfasst wird, sondern nur noch das Scheinziel 17 erkannt wird. In diesem Fall verschwindet das vorausbefindliche, bewegte Objekt 16 und es kann kein Objekttracking bezüglich dieses Objektes mehr durchgeführt werden. Im Falle eines derartigen Objekttrackingabrisses ist es möglich, ein vorher verifiziertes, reales Objekt, das mittels eines Scheinziels 17 plausibilisiert wurde, unter Zuhilfenahme des indirekten Objektreflexionsstrahls dₛ weiterzuverfolgen. Hierzu wird der scheinbar reale Objektaufenthaltsort, der durch den Scheinzielaufenthaltsort 17 sowie den Reflexionspunkt 18 berechenbar ist, ermittelt und dieser berechnete, scheinbar reale Objektaufenthaltsort für das weitere Objekttracking weiter benutzt. Hierdurch kann mittels der Erfassung der indirekten Objektreflexionen das bewegte Objekt 16 weiterverfolgt werden, bis das bewegte Objekt 16 wieder mittels direkter Objektreflexion messbar ist und somit ein Verfahren angegeben werden, mit dem die Objektdetektion, insbesondere für ein Objekttracking des Abstands- und Geschwindigkeitsreglers 1 gegen Scheinziele abgesichert werden kann.

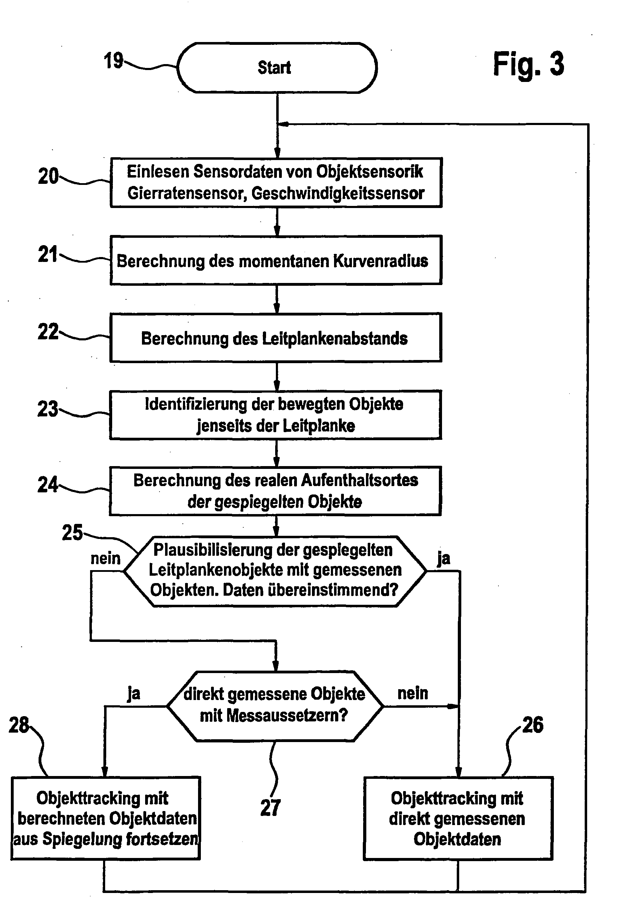

In Figur 3 ist ein Ablaufdiagramm einer Ausführungsform des erfindungsgemäßen Verfahrens dargestellt. Das Verfahren beginnt in Block 19, beispielsweise wenn der adaptive Abstands- und Geschwindigkeitsregler 1 durch das fahrerbetätigbare Bedienelement 5 in Betrieb genommen wird oder nachdem der Fahrer die Zündung des Fahrzeugs eingeschaltet hat. Im weiteren Verlauf werden die Sensordaten gemäß Schritt 20 von der Objektsensorik 3, vom Gierratensensor 6 sowie vom Geschwindigkeitssensor 4 in den Abstands- und Geschwindigkeitsregler 1 eingelesen. Im folgenden Schritt 21 wird der momentane Kurvenradius r des eigenen zukünftigen Fahrzeugkurses 13 berechnet, indem die Gierrate ψ̇ des Gierratensensors 6 ausgewertet wird. Danach wird im darauffolgenden Schritt 22 der Leitplankenabstand b ermittelt, indem beispielsweise stehende Objekte 15 am Fahrbahnrand ausgewertet werden oder indem der Fahrbahnrand 14 geschätzt wird, da keine stehenden Objekte gemessen wurden und der laterale Querabstand b des Fahrbahnrandes geschätzt wird. In Schritt 23 werden die bewegten Objekte 17, die sich jenseits der Leitplanke, also außerhalb der Fahrbahn aufhalten identifiziert. Hierzu wird deren Aufenthaltsort mit dem gemessenen oder geschätzten Fahrbahnrandverlauf 14 verglichen und ermittelt, ob die Objektposition 17 diesseits oder jenseits der Leitplanke 14 liegt. Im darauffolgenden Schritt 24 wird für die bewegten Objekte, die in Schritt 23 als jenseits der Leitplanke identifiziert wurden, der scheinbar reale Aufenthaltsort berechnet, indem aus dem Schnittpunkt der Fahrbahnrands 14 mit der direkten Verbindungsgeraden dₛ, die die Aufenthaltsposition des Scheinziels 17 mit der Position der Objektsensorik 3 verbindet, berechnet wird und als Reflexionspunkt 18 ermittelt wird. Aus der Kenntnis des Reflexionspunktes 18 an der Leitplanke 14 sowie dem Krümmungsradius 12 des Fahrbahnrandes 14, der aus dem Krümmungsradius r des eigenen Fahrkurses und dem lateralen Querversatz b zwischen der Objektsensorik 3 und dem Fahrbahnrand 14 bestimmt wird, kann der scheinbar reale Aufenthaltsort des Objektes ermittelt werden. Im folgenden Schritt 25 wird eine Plausibilisierung der indirekten Objektreflexionen mit den direkten Objekreflexionen durchgeführt, indem überprüft wird, ob die Scheinzielposition 17, die mittels des Reflexionspunktes in einen scheinbar realen Objektaufenthaltsort umgerechnet wurde, mit einem tatsächlich gemessenen, realen Objektaufenthaltsort 16 in etwa übereinstimmt, wobei hierzu die Koordinaten dieser beiden Punkte verglichen werden sowie deren Relativgeschwindigkeiten vᵣₑₗ betragsmäßig in etwa die gleichen sein müssen. Stimmen die Aufenthaltsorte des direkt gemessenen, bewegten Objektes 16 sowie des mittels des Reflexionspunktes 18 umgerechneten, scheinbar realen Objektsaufenthaltsortes des Scheinziels 17 in etwa überein, so kann das direkt gemessene, reale Objekt 16 plausibilisiert werden und Schritt 25 verzweigt nach ja, so dass in Schritt 26 das Objekttracking des Objektes 16 mit den direkt gemessenen Reflexionsdaten durchgeführt werden kann. Stimmen die Werte der Plausibilisierung in Schritt 25 nicht ausreichend überein, so verzweigt Schritt 25 nach nein und wird in Schritt 27 fortgeführt, in dem geprüft wird, ob das mittels direkter Objektreflexion gemessene Objekt 16 Messaussetzer aufweist. Diese Messaussetzer können detektiert werden, indem der Objekttrack des Objektes 16 aus vorherigen Messungen extrapoliert wird und geprüft wird, ob die direkte Objektreflexion des bewegten Objektes 16 zum extrapolierten Kursverlauf des in vorherigen Messzyklen errechneten Kursverlaufs passt. Wird festgestellt, dass das reale Objekt 16 keine Messaussetzer aufweist, dass also für das Objekt 16, Objektpositionen und eine Relativgeschwindigkeit ermittelt wurden, die zu den vorher gemessenen Werten passt, so wird in Schritt 27 nach nein verzweigt und in Schritt 26 das Objekttracking für das Objekt 16 mit den Objektdaten aus der direkten Objektreflexionsmessung fortgeführt. Wurde in Schritt 27 erkannt, dass Messaussetzer vorhanden sind, dass also für das Objekt 16 keine Objektpositionen festgestellt werden konnten, da diese beispielsweise durch die indirekte Reflexion überdeckt wurden, so verzweigt Schritt 27 nach ja und es wird in Schritt 28 ein Objekttracking durchgeführt mit den Objektpositionsdaten und Relativgeschwindigkeitsdaten, die mittels der Scheinzielposition 17 sowie dem Reflexionspunkt 18 in scheinbar reale Objektdaten umgerechnet werden. Hierdurch ist es möglich, auch bei einem Objekttrackingabriss des vorausfahrenden Fahrzeugs 16 ein Objekttracking fortzuführen, beispielsweise zur Regelung des leistungsbestimmenden Stellelementes 10 sowie den Verzögerungseinrichtungen 11 des Fahrzeugs bis wieder direkt gemessene Objektwerte für das vorausfahrende Fahrzeug 16 gemessenen werden.

## Patentansprüche

1. Verfahren zur Objektdetektion bei einem Fahrzeug, das mit einem Objektdetektionssystem (3) ausgestattet ist, wobei das Objektdetektionssystem elektromagnetische Wellen aussendet und an Objekten (15, 16, 17) innerhalb des Detektionsbereichs reflektierte Wellen empfängt, wobei die an einem erkannten Objekt (15, 16) reflektierten Wellen, die zusätzlich an einem entlang der Fahrbahn ausgedehnten Gegenstand (15) reflektiert wurden, ausgewertet werden, **dadurch gekennzeichnet, dass** die Auswertung darin besteht, dass wenn von einem zuvor direkt detektierten Objekt (16) keine direkte Reflexion mehr messbar ist, die indirekte Objektreflexion (17), die an einem entlang der Fahrbahn ausgedehnten Gegenstand (14) reflektiert wurde, zur weiteren Objektdetektion herangezogen wird.

2. Verfahren nach Anspruch 1, **dadurch gekennzeichnet, dass** die Auswertung eine Plausibilisierung ist, bei der mit den indirekten Objektreflexionen (17), die zusätzlich an einem entlang der Fahrbahn ausgedehnten Gegenstand (14) reflektiert wurden, die direkt gemessenen Objektreflexionen (16), die nicht an einem entlang der Fahrbahn ausgedehnten Gegenstand (14) reflektiert wurden, verifiziert werden.

3. Verfahren nach einem der vorhergehenden Ansprüche, **dadurch gekennzeichnet, dass** die entlang der Fahrbahn ausgedehnten Gegenstände (14) Leitplanken, Tunnelwände, Begrenzungsmauern oder Lärmschutzwände sind.

4. Verfahren nach einem der vorhergehenden Ansprüche, **dadurch gekennzeichnet, dass** zur Auswertung die indirekte Objektreflexion (17) in eine angenommene, direkte Objektreflexion (16) umgerechnet wird.

5. Verfahren nach Anspruch 4, **dadurch gekennzeichnet, dass** zur Umrechnung der indirekten Objektreflexion (17) in eine angenommene, direkte Objektreflexion (16) die Position des entlang der Fahrbahn ausgedehnten Gegenstandes (14) geschätzt wird.

6. Verfahren nach Anspruch 5, **dadurch gekennzeichnet, dass** die Umrechnung derart geschieht, dass der gemessene Objektaufenthaltsort (17), der durch die indirekte Messung detektiert wurde, an dem entlang der Fahrbahn ausgedehnten Gegenstand (14) gespiegelt wird.

7. Vorrichtung zur Objektdetektion bei einem Fahrzeug, das mit einem Objektdetektionssystem (3) ausgestattet ist, wobei das Objektdetektionssystem elektromagnetische Wellen aussendet und an Objekten (15, 16, 17) innerhalb des Detektionsbereichs reflektierte Wellen empfängt, wobei die Vorrichtung ein Berechnungmittel (8) aufweist, das die an einem erkannten Objekt (15, 16) reflektierten Wellen, die zusätzlich an einem entlang der Fahrbahn ausgedehnten Gegenstand (15) reflektiert wurden, auswertet, **dadurch gekennzeichnet, dass** wenn von einem zuvor direkt detektierten Objekt (16) keine direkte Reflexion mehr messbar ist, die indirekte Objektreflexion (17), die an einem entlang der Fahrbahn ausgedehnten Gegenstand (14) reflektiert wurde, zur weiteren Objektdetektion herangezogen wird.

## Claims

1. Method for detecting objects in a vehicle which is equipped with an object detection system (3), wherein the object detection system emits electromagnetic waves and receives waves reflected at objects (15, 16, 17) within the detection range, wherein the waves which are reflected at a detected object (15, 16) and are additionally reflected at an object (15) which extends along the carriageway are evaluated, **characterized in that** the evaluation consists in the fact that if no further direct reflection can be measured by a previously directly detected object (16), the indirect object reflection (17) which was reflected at an object (14) extending along the carriageway is used for further object detection.

2. Method according to Claim 1, **characterized in that** the evaluation is plausibility checking in which the indirect object reflections (17), which were additionally reflected at an object (14) extending along the carriageway are used to verify the directly measured object reflections (16) which were not reflected at an object (14) extending along the carriageway.

3. Method according to one of the preceding claims, **characterized in that** the objects (14) extending along the carriageway are crash barriers, tunnel walls, boundary walls or noise absorbing walls.

4. Method according to one of the preceding claims, **characterized in that** for the purpose of evaluation the indirect object reflection (17) is converted into an assumed, direct object reflection (16).

5. Method according to Claim 4, **characterized in that** for the purpose of conversion of the indirect object reflection (17) into an assumed, direct object reflection (16), the position of the object (14) extending along the carriageway is estimated.

6. Method according to claim 5, **characterized in that** the conversion is carried out in such a way that the measured object location (17), which was detected by the indirect measurement, is reflected at the object (14) extending along the carriageway.

7. Device for detecting objects in a vehicle which is equipped with an object detection system (3), wherein the object detection system emits electromagnetic waves and receives waves which are reflected at objects (15, 16, 17) within the detection range, wherein the device has a calculation means (8) which evaluates the waves which are reflected at a detected object (15, 16) and have been additionally reflected at an object (15) extending along the carriageway, **characterized in that** if no further direct reflection can be measured from a previously directly detected object (16), the indirect object reflection (17), which has been reflected at an object (14) extending along the carriageway, is used for the further object detection.

## Revendications

1. Procédé de détection d'objet sur un véhicule qui est équipé d'un système de détection d'objet (3), le système de détection d'objet émettant des ondes électromagnétiques et recevant les ondes réfléchies sur des objets (15, 16, 17) à l'intérieur de la zone de détection, les ondes réfléchies sur un objet détecté (15, 16), lesquelles ont en plus été réfléchies sur un objet (15) qui s'étend le long de la voie de circulation, étant interprétées, **caractérisé en ce que** l'interprétation consiste **en ce que** lorsqu'il n'est plus possible de mesurer une réflexion directe d'un objet (16) détecté directement précédemment, la réflexion d'objet indirecte (17), laquelle a été réfléchie sur un objet (14) qui s'étend le long de la voie de circulation, est utilisée pour la poursuite de la détection d'objet.

2. Procédé selon la revendication 1, **caractérisé en ce que** l'interprétation est un contrôle de plausibilité lors duquel la présence de réflexions d'objet (16) mesurées directement, lesquelles n'ont pas été réfléchies sur un objet (14) qui s'étend le long de la voie de circulation, est confirmée avec les réflexions d'objet indirectes (17), lesquelles ont en plus été réfléchies sur un objet (14) qui s'étend le long de la voie de circulation.

3. Procédé selon l'une des revendications précédentes, **caractérisé en ce que** les objets (14) qui s'étendent le long de la voie de circulation sont des glissières de sécurité, des parois de tunnel, des murs de délimitation ou des écrans antibruit.

4. Procédé selon l'une des revendications précédentes, **caractérisé en ce que** pour l'interprétation, la réflexion d'objet indirecte (17) est convertie en une réflexion d'objet directe (16) supposée.

5. Procédé selon la revendication 4, **caractérisé en ce que** pour la conversion de la réflexion d'objet indirecte (17) en une réflexion d'objet directe (16) supposée, la position de l'objet (14) qui s'étend le long de la voie de circulation est estimée.

6. Procédé selon la revendication 5, **caractérisé en ce que** la conversion s'effectue de telle sorte que l'endroit mesuré où se trouve l'objet (17) qui a été détecté par la mesure indirecte est reflété sur l'objet (14) qui s'étend le long de la voie de circulation.

7. Dispositif de détection d'objet sur un véhicule qui est équipé d'un système de détection d'objet (3), le système de détection d'objet émettant des ondes électromagnétiques et recevant les ondes réfléchies sur des objets (15, 16, 17) à l'intérieur de la zone de détection, le dispositif présentant des moyens de calcul (8) qui interprètent les ondes réfléchies sur un objet détecté (15, 16), lesquelles ont en plus été réfléchies sur un objet (15) qui s'étend le long de la voie de circulation, **caractérisé en ce que** lorsqu'il n'est plus possible de mesurer une réflexion directe d'un objet (16) détecté directement précédemment, la réflexion d'objet indirecte (17), laquelle a été réfléchie sur un objet (14) qui s'étend le long de la voie de circulation, est utilisée pour la poursuite de la détection d'objet.
